**Europäisches Patentamt**

**European Patent Office**

**Office européen des brevets**

(19)

(11) Numéro de publication: **0 224 286**
**B1**

(12)

# FASCICULE DE BREVET EUROPEEN

(45) Date de publication du fascicule du brevet:
**23.05.90**

(21) Numéro de dépôt: **86201865.2**

(22) Date de dépôt: **24.10.86**

(51) Int. Cl.⁵: **G01S 13/86**, G01S 13/50,
F42C 13/00, F42C 14/08

(54) **Dispositif pour mesurer la distance qui le sépare d'un mobile.**

(30) Priorité: **29.10.85 FR 8516042**

(43) Date de publication de la demande:
**03.06.87 Bulletin 87/23**

(45) Mention de la délivrance du brevet:
**23.05.90 Bulletin 90/21**

(84) Etats contractants désignés:
**DE FR GB SE**

(56) Documents cités:
**DE-A-2 315 815**
**DE-A-2 315 816**

(73) Titulaire: **TELECOMMUNICATIONS**
**RADIOELECTRIQUES ET TELEPHONIQUES T.R.T.,**
**88, rue Brillat Savarin, F-75013 Paris(FR)**

(84) Etats contractants désignés: **FR**

(73) Titulaire: **N.V. Philips' Gloeilampenfabrieken,**
**Groenewoudseweg 1, NL-5621 BA Eindhoven(NL)**

(84) Etats contractants désignés: **DE GB SE**

(72) Inventeur: **Pirolli, Claude, SOCIETE CIVILE**
**S.P.I.D. 209 rue de l'Université, F-75007 Paris(FR)**
Inventeur: **Fouilloy, Jean-Pierre, SOCIETE CIVILE**
**S.P.I.D. 209 rue de l'Université, F-75007 Paris(FR)**

(74) Mandataire: **Chaffraix, Jean et al, Société Civile**
**S.P.I.D. 209, rue de l'Université, F-75007 Paris(FR)**

## Description

La présente invention concerne un dispositif pour mesurer la distance qui le sépare d'un mobile, dispositif comportant des moyens d'émission pour émettre une onde dans un champ de mesure, des moyens de réception pour d'une part recevoir l'onde réfléchie par le mobile se déplaçant dans le champ de mesure, et pour d'autre part fournir un signal de battement à la fréquence Doppler, des moyens de délimitation pour former, dans le champ de mesure, au moins deux lignes-repères et des moyens de traitement recevant les valeurs du signal à la fréquence Doppler aux instants de franchissement par le mobile desdites lignes-repères.

Dans les demandes de brevet d'Allemagne Fédérale No 2 315 815, 2 315 816 et 2 365 765, un tel dispositif est décrit. Ce dispositif décrit est embarqué sur un mobile et utilisé dans un asservissement pour le maintenir par sustentation électromagnétique, à une distance fixe d'un rail. Cette distance se déduit de la fréquence Doppler en des instants définis par des lignes-repères obtenues au moyen d'un faisceau laser émis depuis le mobile et se réfléchissant sur des réflecteurs disposés le long du rail à égale distance les uns des autres.

Ce dispositif nécessite la présence d'éléments disposés (les réflecteurs) en vis à vis. Or, il existe certaines applications où la présence de ces éléments en vis à vis n'est pas tolérable. C'est le cas notamment où le dispositif est utilisé pour déclencher une mine au passage d'un véhicule circulant dans son voisinage. Il importe alors que le dispositif soit discret, ce qui exclut donc la présence d'objets extérieurs pour coopérer avec le dispositif. Il convient de noter que pour ce genre d'application, la mesure de distance est indispensable pour ne déclencher la mine que si le véhicule pénètre dans la zone d'efficacité de celle-ci.

Pour cela, un dispositif pour mesurer la distance qui le sépare d'un mobile est remarquable en ce que les moyens de délimitation sont constitués à partir de détecteurs thermiques disposés dans un montage optique présentant au moins deux axes optiques non parallèles pour définir les lignes-repères, en ce qu'il est prévu un circuit de chronométrage pour définir les instants de franchissement par le mobile des lignes repères et pour les fournir au moyen de traitement, et en ce que les moyens de traitement sont agencés pour élaborer l'information de distance à partir de deux desdites valeurs du signal à la fréquence Doppler et de l'intervalle de temps entre lesdits instants de franchissement.

Un mode de réalisation préféré, selon lequel il est prévu un moyen de mise en route commandé à partir des détecteurs thermiques pour ne déclencher les moyens d'émission qu'au franchissement d'une direction repère par le mobile, procure l'avantage suivant.

Le dispositif devient alors pratiquement indécelable puisqu'en dehors du passage de véhicule; il se comporte d'une manière passive c'est-à-dire qu'il n'émet aucun rayonnement.

La description suivante, faite en regard des dessins annexés, le tout donné à titre d'exemple non limitatif, fera bien comprendre comment l'invention peut être réalisée.

La figure 1 montre schématiquement un dispositif pour mesurer la distance conforme à l'invention.

La figure 2 est un schéma destiné à faciliter la compréhension du fonctionnement du dispositif de l'invention.

La figure 3 montre un mode de réalisation du dispositif pour mesurer la distance conforme à l'invention.

Les figures 4a et 4b montrent les ordinogrammes de fonctionnement d'un ensemble à microprocesseur faisant partie du dispositif de la figure 3.

La figure 5 montre, en variante, comment le dispositif de la figure 3 peut être modifié pour pouvoir déclencher une mine.

La figure 6 montre la modification afférente apportée à l'ordinogramme de la figure 4b.

La figure 7 montre un mode de réalisation des moyens de délimitation.

La figure 8 montre un montage d'éléments détecteurs thermiques convenant pour les moyens de délimitation.

La figure 9 montre un dispositif pour mesurer la distance, pour lequel lignes-repères sont prévues.

La figure 10 montre la modification apportée en conséquence au schéma de la figure 3.

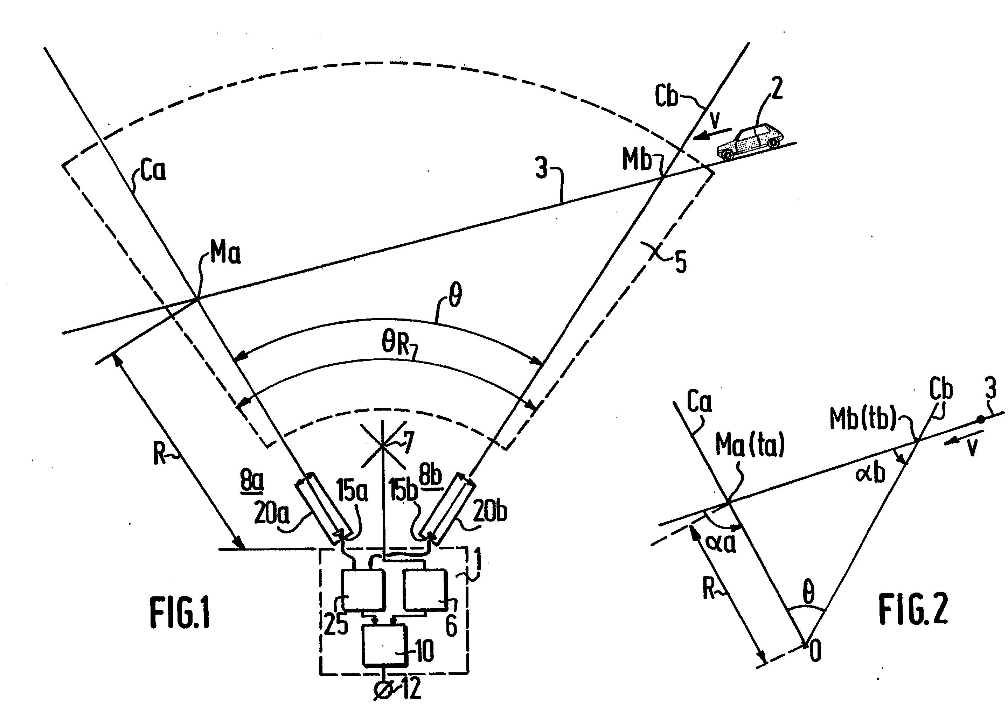

Le dispositif de l'invention porte sur la figure 1 la référence 1. Le mobile 2, par exemple un véhicule routier, se déplace avec une vitesse "v" selon une trajectoire 3 supposée rectiligne. Cetter trajectoire pénètre, comme représenté sur la figure 1, le champ de mesure 5 du dispositif 1. Ce champ de mesure est défini en fait par la portée d'un système radar-Doppler 6 qui fait partie du dispositif 1 et qui émet et reçoit des ondes électromagnétiques par l'intermédiaire d'une antenne d'émission-réception 7 ; la largeur du lobe de rayonnement de cette antenne 7 est θR. Grâce à des moyens de délimitation corstitués notamment par des dispositifs 8a et 8b, on crée dans ce champ d'action des zones-repères que l'on assimilera à deux lignes droites Ca et Cb et qui seront dénommées lignes-repères.

Ces lignes forment entre elles un angle θ dont le sommet se situe au niveau du dispositif 1. La trajectoire 3 coupe les lignes repères Ca et Cb aux points Ma et Mb respectivement. Un circuit de traitement 10 fournit sur la borne 12 l'indication de distance R entre le point Ma et le dispositif 1. Cette distance est déterminée notamment par les fréquences Doppler fournies par le système radar Doppler 6.

Conformément à l'invention, les dispositifs 8a et 8b sont constitués à partir de détecteurs thermiques 15a et 15b disposés dans un montage optique formé de deux systèmes optiques 20a et 20b dont les axes optiques définissent les lignes-repères. Il est prévu un circuit de chronométrage 25 pour définir les instants de franchissement des lignes-repères et pour les fournir au circuit de traitement 10.

Le principe de fonctionnement de l'invention repose sur les considérations suivantes :

On se reporte à la figure 2. Le point 0 représente l'emplacement du dispositif 1. La trajectoire 3 coupe les droites Ca et Cb aux points Ma et Mb en formant les angles $\alpha a$ et $\alpha b$ respectivement. On note par tb et ta les instants où le mobile 2 franchit les lignes Cb et Ca.

Lorsque le mobile franchit la ligne Cb, par suite de l'effet Doppler il existe une différence de fréquence fb entre l'onde émise, dont la longueur d'onde est $\lambda$, et l'onde reçue :

$$fb = \frac{2v}{\lambda} \cos(\alpha b)$$

Lorsque le mobile franchit la ligne Ca la différence de fréquence fa s'écrit :

$$fa = \frac{2v}{\lambda} \cos(\alpha a)$$

En remarquant que :
$(\alpha a) - (\alpha b) = \theta$
et si on suppose ensuite $\theta$ petit on peut écrire :

$$fa - fb \approx -\frac{2v}{\lambda} . \theta . \sin(\alpha b)$$

$$\frac{Ma\ Mb}{\sin \theta} = \frac{R}{\sin(\alpha b)}$$

$$d'où\ R \approx \frac{\lambda}{2} \frac{(ta-tb)}{\theta} . \frac{fb-fa}{\sin \theta}$$

Les symboles $\approx$ signifient : à peu près égal.

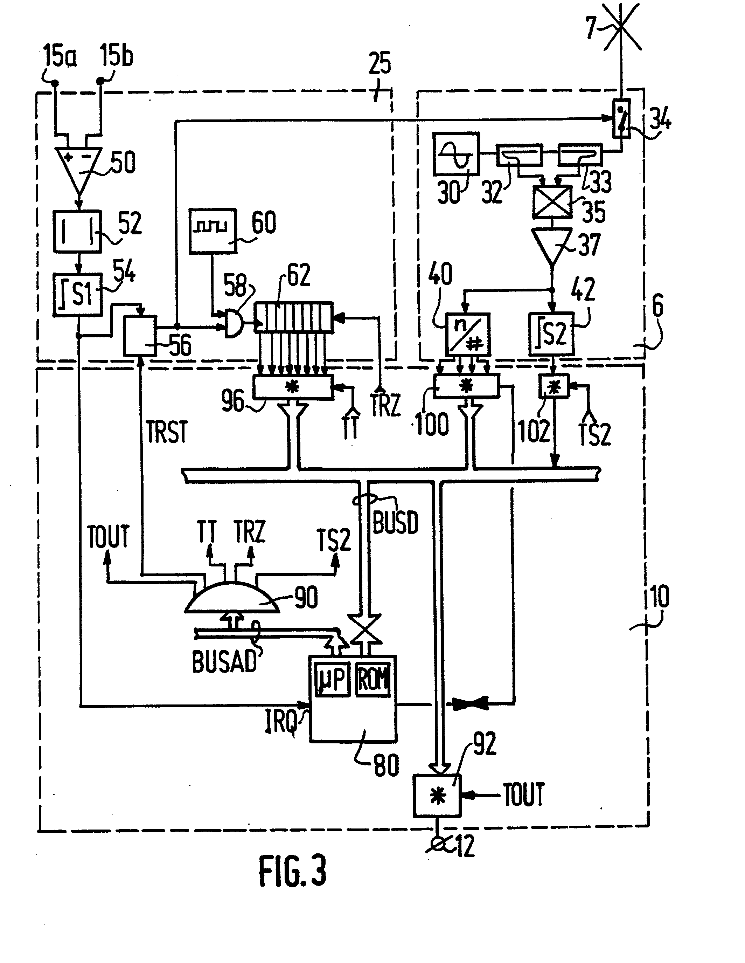

La figure 3 montre en détail un mode de réalisation du dispositif 1.

Le système radar 6 est formé d'un générateur haute fréquence 30 fournissant une onde continue de 15000 MHz par exemple ; cette onde est transmise à l'antenne d'émission-réception 7 en passant successivement par l'intermédiaire d'un premier coupleur directif 32, d'un deuxième coupleur directif 33 et d'un interrupteur à diode PIN 34. Un circuit-mélangeur équilibré 35 effectue le mélange de l'onde directe prélevée au moyen du coupleur 32 et de l'onde réfléchie prélevée par le coupleur 33. Après une amplification procurée par un amplificateur 37, on obtient un signal de battement ayant la fréquence due à l'effet Doppler et une amplitude convenable pour être codé sous forme numérique par le convertisseur analogique-numérique 40. Un circuit à seuil 42 fournit à sa sortie un signal indiquant que le mobile 2 est d'une certaine importance, ce qui correspond à une certaine amplitude du signal à la sortie de l'amplificateur 37.

Le circuit de chronométrage 25 est constitué de la manière suivante. Les fils de sortie des détecteurs thermiques sont reliés respectivement aux entrées (+) et (-) d'un amplificateur différentiel 50 ; un circuit d'évaluation en valeur absolue 52, dont l'entrée est connectée à la sortie de cet amplificateur 50, fournit un signal dont l'amplitude dépend de celle du signal de sortie, mais non de son signe. Un circuit à seuil 54, connecté à la sortie du circuit 52, ne fournit un signal actif à sa sortie que si l'amplitude du signal appliqué à son entrée a une valeur suffisante. Ce signal actif met à "1" l'état d'une bascule 56. Le signal de sortie de cette bascule ouvre ou ferme, selon son état, une porte ET 58 à deux entrées. Les signaux périodiques émis en permanence par un circuit d'horloge 60 ne sont transmis à une entrée de comptage d'un compteur 62 par l'intermédiaire de cette porte 58 que lorsque le signal de sortie de la bascule 56 l'autorise.

Il convient de remarquer la liaison qui existe entre la sortie de la bascule 56 et la commande de l'interrupteur 34. L'interrupteur 34 est fermé (alors l'antenne 10 rayonne) lorsque la porte 58 est ouverte, ce qui correspond au passage du mobile 2 entre les deux lignes repères Ca et Cb ; c'est-à-dire que le dispositif ne rayonne que durant le temps nécessaire à une mesure de distance.

Le circuit de traitement 10 est élaboré autour d'un ensemble à microprocesseur 80 constitué essentiellement d'un microprocesseur proprement dit, par exemple le TMS 32010 fabriqué par le société TEXAS INSTRUMENT et une mémoire à lecture seule (mémoire ROM) contenant les instructions qui régissent tout le fonctionnement du dispositif. L'ensemble 80 communique avec l'extérieur au moyen de deux lignes communes BUSAD et BUSD. La ligne BUSD bidirectionnelle est utilisée pour fournir des données à l'extérieur et pour en recevoir, la ligne BUSAD pour transmettre des codes d'adresses. Un décodeur 90 décode certains de ces codes d'adresses pour élaborer différents signaux de commandes TOUT, TRST, TT, TRZ, TS2. Les signaux de commande TOUT, TT et TS2 sont respectivement appliqués à l'entrée de commande "état ouvert-état passant" d'amplificateurs à trois états 92, 96 et 102 connectés à la ligne BUSD. L'amplificateur 92 permet de fournir sur la borne 12 l'indication de distance. Les entrées de l'amplificateur 96 reçoivent les signaux donnant le contenu du compteur 62. La sortie de la porte 58 est reliée à la commande de mise à zéro du compteur 62. Les signaux de commande TRST et TRZ sont appliqués directement à l'entrée de remise à zéro de la bascule 56 et du compteur 62. L'entrée de l'amplificateur 102 est reliée à la sortie du circuit à seuil 42. On notera la présence d'un ensemble amplificateur à trois états commandé directement à l'ensemble 80 d'une manière décrite dans un article dont il sera fait mention ci-dessous.

Le dispositif fonctionne de la manière suivante. On suppose tout d'abord que l'interrupteur 34 est ouvert et que le véhicule 2 se déplace de la droite vers la gauche (voir figure 1). Lorsqu'il franchit la ligne Cb, le détecteur 15 décèle ce franchissement ; il y a donc un déséquilibre aux entrées de l'amplificateur différentiel 50 (figure 3) ; quel que soit le signe de ce déséquilibre seule son amplitude est considérée à la sortie du circuit d'évaluation 52. Finalement, le circuit à seuil 54 fournit à sa sortie un signal actif. Ceci a deux conséquences : la première est que la bascule 56 change d'état provoquant d'une part la fermeture de l'interrupteur 34 et d'autre part le passage par la porte 58 des impulsions de comptage du circuit d'horloge 60 pour le compteur 62 ; la deuxième conséquence est qu'un signal actif est appliqué à l'entrée IRQ pour interruption de l'ensemble 80, ce qui déclenche le déroulement du programme d'interruption qui sera examiné plus en détail.

A l'intérieur du système radar-Doppler 6 l'onde de battement à la sortie de l'amplificateur est convertie par le codeur 40 pour être traitée par l'ensemble 10 et fournit ainsi l'information de vitesse du véhicule 2 au franchissement de la ligne Cb. Puis le véhicule 2 franchit la ligne Ca. Un signal actif apparaît à la sortie du circuit 54 ; ce signal n'a aucun effet sur la bascule 56 mais déclenche au niveau de l'ensemble 80 la deuxième partie du programme d'interruption décrit ci-après. Cette deuxième partie a pour but d'une part de déterminer la vitesse du véhicule au franchissement de la ligne Ca et d'autre part de calculer la distance R. Cetter partie de programme détermine également quelques fonctions annexes comme par exemple la remise à zéro de la bascule 56 et du compteur 96. D'autre part, on peut utiliser le signal à la sortie du circuit à seuil 42 pour valider ou non le résultat de la mesure de R.

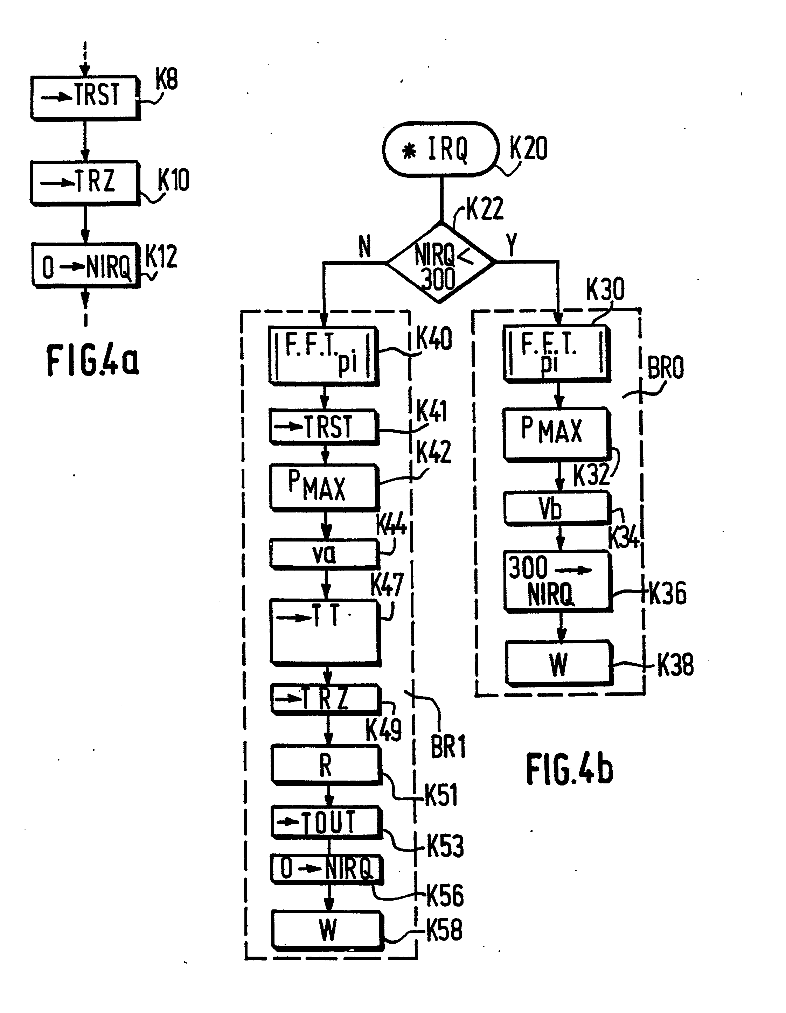

L'ordinogramme représentant le fonctionnement de l'ensemble 80 est représenté aux figures 4a et 4b. La figure 4a représente la phase d'initialisation déclenchée par la mise en route du dispositif.

La case K8 à la figure 4a signifie que l'on rend actif le signal TRST ; pour cela, on engendre un certain code d'adresse sur la ligne BUSAD. Ce certain code est reconnu par le décodeur 90 de sorte que le signal TRST est rendu actif pour mettre à l'état "0" la bascule 56. La case K10 à la figure 4a signifie que l'on rend actif le signal TRZ ; pour cela, on engendre un certain autre code d'adresse sur la ligne BUSAD. Ce certain autre code reconnu par le décodeur 90 rend actif le signal TRZ. De cette manière donc, le contenu du compteur 62 est initialisé à zéro. A la case K12 on indique que l'on met à zéro le contenu d'un emplacement d'une mémoire (emplacement dénommé NIRQ) située à l'intérieur de l'ensemble 80. Le déroulement du programme dont l'ordinogramme est représenté à la figure 4b est déclenché par des impulsions provoquant des interruptions. C'est ce qui est indiqué par la case K20. Le programme commence par le test du contenu de l'emplacement NIRQ (case K22). Si ce contenu est inférieur à une quantité égale par exemple à 300 on effectue la branche de programme BRO, sinon, on effectue la branche de programme BR1. La branche de programme BRO commence à la case K30 où figure une procédure de transformation de Fourier rapide. On trouvera tous les détails sur cette procédure, dans laquelle participe le convertisseur analogique-numérique 40, dans l'ouvrage édité par TEXAS INSTRUMENT intitulé "Signal Processing with the TMS 320" à l'article : "Signal processing μC builds FFT-based Spectrum analyzer" pages 21-26. Les différents échantillons appelés $p_i$, résultant de cette transformation, par exemple au nombre de 256, sont rangés en mémoire interne de sorte que l'échantillon de plus forte valeur $p_{MAX}$ puisse être déterminé (case K32). De là, on peut calculer (case K34) la valeur Vb qui est mise en mémoire. Puis on met à l'emplacement NIRQ la valeur 300 (case K36). Enfin, cette branche de programme se termine par une phase d'attente pour la prochaine impulsion d'interruption.

Cette prochaine impulsion d'interruption permet le déroulement de la branche de programme BR1 puisque le test indiqué à la case K22 est négatif. On retrouve dans cette branche les mêmes opérations indiquées aux cases K30 et K32 (dans cette branche BR1 elles sont référencées par K40 et K42). Cependant, on a inséré (case K41) une opération supplémentaire. Cette opération consiste à mettre à zéro la bascule 56. La case K44 indique le calcul de la vitesse Va. Puis on vient lire (case K47) le contenu du compteur 62. Pour cela, on active le signal TT ; ce contenu est nécessaire pour calculer (case K51) la valeur R ; cette valeur peut être enfin communiquée à la borne 12 et pour cela on active (case K53) le signal TOUT. Puis on met "0" à l'emplacement de mémoire repéré par NIRQ (case K56) et l'on passe enfin en phase d'attente K58. La prochaine impulsion d'interruption déclenchera alors le déroulement de la branche BRO de programme.

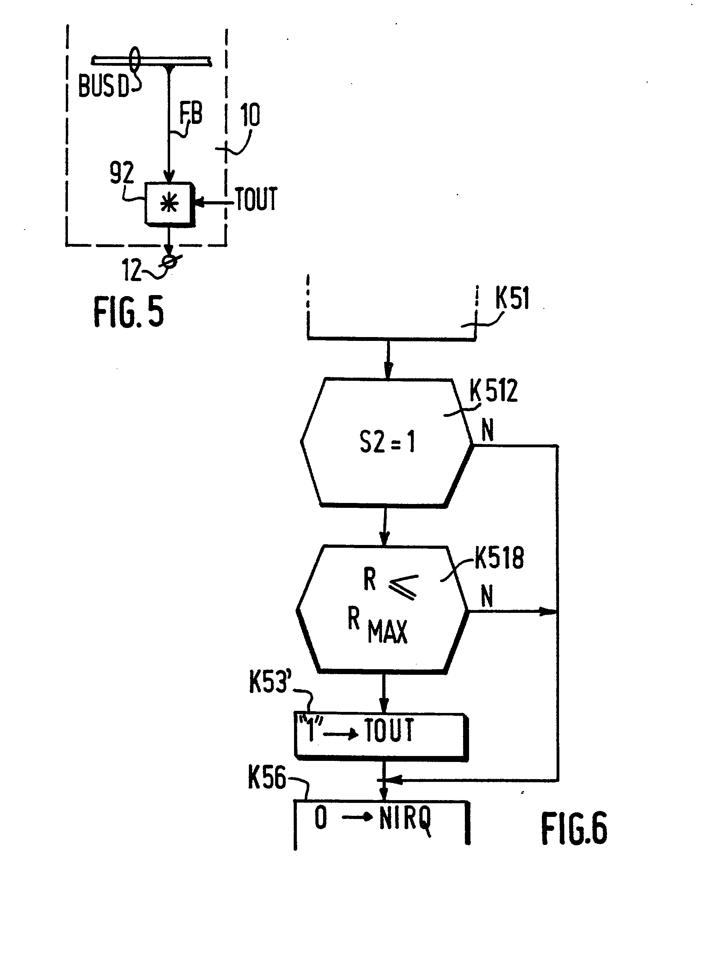

Dans le genre d'utilisation de déclenchement de mine envisagé ci-dessus, l'amplificateur 92 au lieu d'être connecté à tous les fils de la ligne BUSD peut être connecté à un seul fil FB de cette ligne, comme indiqué sur la figure 5. Pour que ce signal soit rendu actif, il doit auparavant satisfaire certains tests. Ceci est représenté à la figure 6 où l'on voit que des tests viennent s'insérer entre les cases K51 et K53 de l'ordinogramme de la figure 4b. Ces cinq tests sont représentés par les cases K512 et K518.

A la case K512 on vient tester si le niveau du signal de battement a une valeur suffisante, ce qui revient à tester la valeur du signal de sortie du circuit à seuil 42.

Puis enfin, on compare la valeur R qui vient d'être calculée avec une valeur $R_{MAX}$ donnant la portée d'efficacité de l'explosif déclenché par le dispositif de l'invention. Si R est inférieur à la valeur $R_{MAX}$, alors la case K53' signifie qu'un signal actif "1" est fourni à la borne 12.

Il est à remarquer que si un seul des tests indiqués aux cases K512 et K518 est négatif, on passe à la case K56, ce qui revient à mettre à l'état initial le dispositif.

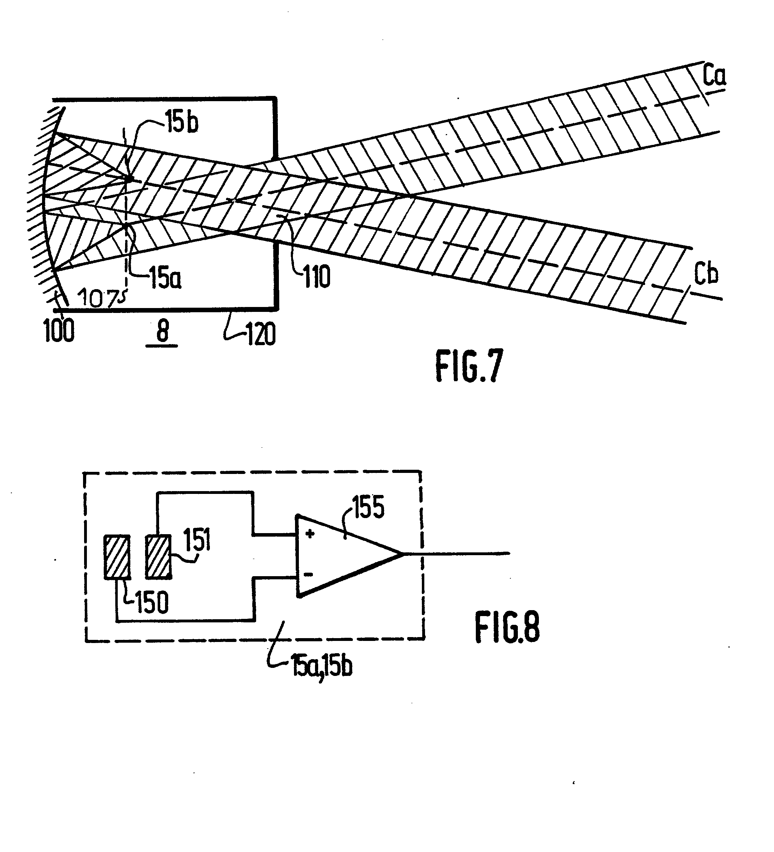

A la figure 7, on représente un mode de réalisation préféré d'un dispositif 8 pour créer les lignes-repères. Dans ce dispositif de la figure 7, les détecteurs thermiques portant toujours les références 15a et 15b sont disposés dans le plan focal 107 d'une surface concave réfléchissante, de sorte qu'un faisceau centré sur la ligne Ca vient converger sur le détecteur 15a en passant au travers d'un hublot 110 pratiqué dans une enceinte 120 protégeant l'ensemble et qu'un autre faisceau centré sur la ligne Cb converge sur le détecteur 15b.

La figure 8 montre comment les détecteurs thermiques peuvent être constitués. Les références 150 et 151 repèrent les éléments sensibles au rayonnement thermique ; un signal de sortie est appliqué à un amplificateur différentiel 155, de sorte que le signal de sortie est insensible aux dérives thermiques des deux éléments 150 et 151 et aux variations de rayonnement (et en général à tous les parasites affectant de la même façon les deux détecteurs).

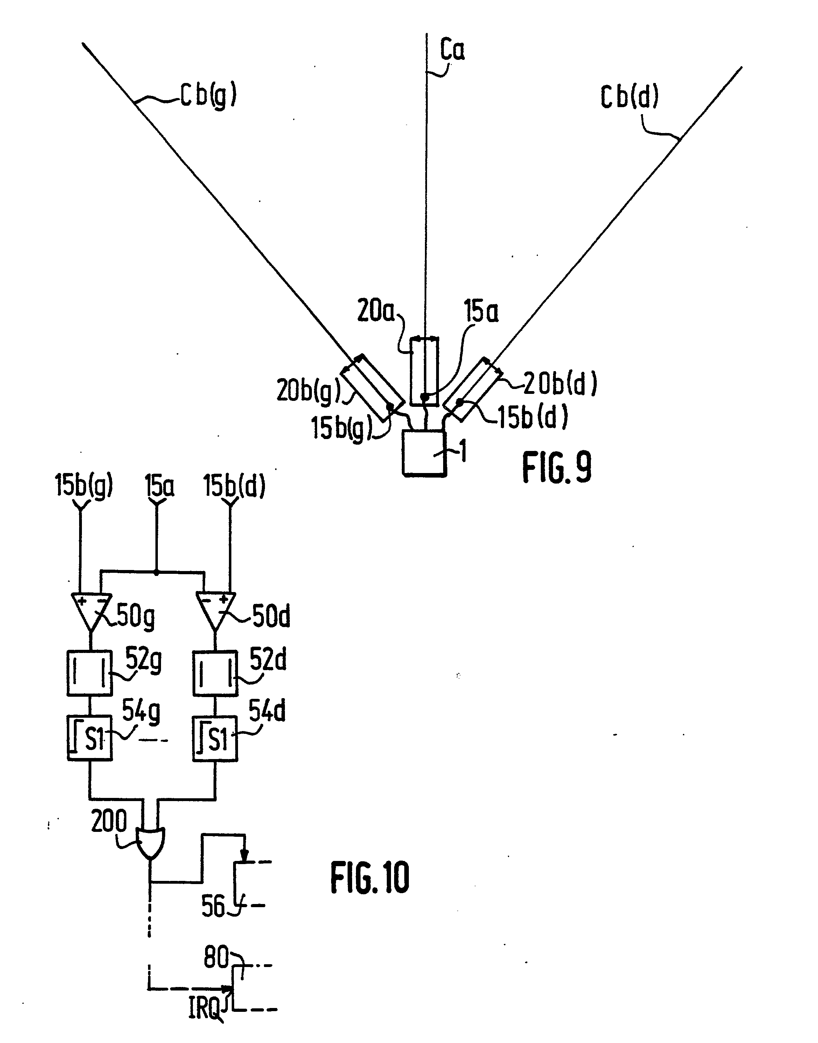

A la figure 9, on montre un dispositif conforme à l'invention où le véhicule peut surgir indifféremment de la droite ou de la gauche de la ligne Ca. Pour cela, on crée une troisième ligne repère Cb(g) en plus de la ligne repère Cb(d) située à droite. A ces lignes Cb(g), Ca, Cb(d) on peut associer des montages optiques 20(g), 20a et 20b(d) avec les détecteurs 15b(g), 15a et 15b(d) ou bien, comme dans la figure 7, disposer trois des éléments détecteurs dans le plan focal de la surface 100.

La figure 10 montre comment les signaux de sortie de ces différents éléments de sortie sont utilisés. Les signaux de sortie des éléments 15a et 15b(d) sont appliqués aux entrées (-) et (+) d'un amplificateur différentiel 50d suivi d'un circuit d'évaluation 52d et d'un circuit à seuil 54d. D'une manière semblable, les signaux de sortie des éléments 15a et 15b(g) sont appliqués aux entrées (-) et (+) d'un amplificateur différentiel 50g suivi d'un circuit d'évaluation 52g et d'un circuit à seuil 54g. Une porte OU receuille les signaux aux sorties des circuits 54g et 54d pour les fournir à la bascule 56 et à l'ensemble 80.

## Revendications

1. Dispositif pour mesurer la distance qui le sépare d'un mobile, dispositif comportant des moyens d'émission pour émettre une onde dans un champ de mesure, des moyens de réception pour d'une part recevoir l'onde réfléchie par le mobile se déplaçant dans le champ de mesure, et pour d'autre part fournir un signal de battement à la fréquence Doppler, des moyens de délimitation pour former, dans le champ de mesure, au moins deux lignes-repères et des moyens de traitement recevant les valeurs du signal à la fréquence Doppler aux instants de franchissement par le mobile desdites lignes-repères, caractérisé en ce que les moyens de délimitation sont constitués à partir de détecteurs thermiques disposés dans un montage optique présentant au moins deux axes optiques non parallèles pour définir les lignes-repères, en ce qu'il est prévu un circuit de chronométrage pour définir les instants de franchissement par le mobile des lignes repères et pour les fournir au moyen de traitement, et en ce que les moyens de traitement sont agencés pour élaborer l'information de distance à partir de deux desdites valeurs du signal à la fréquence Doppler et de l'intervalle de temps entre lesdits instants de franchissement.

2. Dispositif pour mesurer la distance qui le sépare d'un mobile, selon la revendication 1, caractérisé en ce qu'il est prévu un moyen de mise en route commandé à partir des détecteurs thermiques pour ne déclencher les moyens d'émission qu'au franchissement d'une ligne-repère par le mobile.

3. Dispositif pour mesurer la distance qui le sépare d'un mobile selon la revendication 1 ou 2, caractérisé en ce que les détecteurs thermiques sont disposés à une certaine distance les uns des autres dans le plan focal d'une optique convergente de façon à créer les lignes-repères, les axes optiques étant définis par les trajets issus de ces détecteurs et obtenus par l'optique convergente.

4. Dispositif pour mesurer la distance qui le sépare d'un mobile selon la revendication 1 ou 2 ou 3, caractérisé en ce que les moyens de traitement sont conçus pour évaluer la grandeur suivante:

$$R = \lambda/2 \, \frac{(ta - tb)}{\theta} \cdot \frac{fb - fa}{\sin \theta}$$

où $\lambda$ est la longueur d'onde de rayonnement de l'onde émise par les moyens d'émission,
(ta − tb) est l'intervalle de temps séparant les instants de franchissement par le mobile de deux lignes repères, fa, fb sont les fréquences Doppler engendrées par le mobile aux instants de franchissement des lignes repères et

θ est l'angle formé par les lignes repères.

5. Dispositif pour mesurer la distance qui le sépare d'un mobile selon l'une des revendications 1 à 4, destiné à fournit un signal relatif à un mobile et caractérisé en ce que les moyens de traitement comportent un analyseur de spectre de fréquence Doppler pour fournir des composantes de fréquence Doppler et en ce que les moyens de traitement sont conçus pour mettre à l'état actif ledit signal lorsque certaines des conditions suivantes sont respectées:

c1) la distance R qui le sépare du mobile est inférieure à une valeur prédéterminée $R_{MAX}$,

c2) le niveau du signal de battement est suffisant.

## Patentansprüche

1. Vorrichtung zum Messen des eigenen Abstandes von einem bewegenden Objekt, mit Sendemitteln zum Aussenden einer Welle in einem Messfeld, Empfangsmitteln zum einerseits Empfangen der an dem sich in dem Messfeld bewegenden Objekt reflektierten Welle, und zum andererseits Liefern eines Überlagerungssignals mit der Dopplerfrequenz, mit Begrenzungsmitteln zum in dem Messfeld Erzeugen von wenigstens zwei Markierungslinien und mit Mitteln zum Verarbeiten der empfangenen Werte des Signals mit der Dopplerfrequenz zu den Zeitpunkten, an denen das bewegliche Objekt die genannten Markierungslinien überschreitet, dadurch gekennzeichnet, daß die Begrenzungsmittel aus Wärmedetektoren bestehen, die in einer optischen Anordnung vorgesehen sind, die zum Definieren der Markierungslinien wenigstens zwei nicht parallele optische Achsen aufweist, daß die Vorrichtung mit einer Zeitmeßanordnung versehen ist zum Ermitteln der Zeitpunkte, an denen das bewegliche Objekt die Markierungslinien überschreitet und zum Zuführen dieser Daten zu der Verarbeitungsanordnung, und daß die Verarbeitungsmittel dazu eingerichtet sind, die Information in bezug auf den Abstand aus den genannten Werten des Dopplerfrequenzsignals und aus dem Zeitintervall zwischen den genannten Überschreitungszeitpunkten zu verarbeiten.

2. Vorrichtung zum Messen des Abstandes dieser Vorrichtung von einem bewegenden Objekt nach Anspruch 1, dadurch gekennzeichnet, daß ein Startmittel vorgesehen ist, das von den Wärmedetektoren gesteuert wird, wodurch die Sendemittel nur beim Überschreiten einer Markierungslinie durch das bewegende Objekt aktiviert werden.

3. Vorrichtung zum Messen des Abstandes dieser Vorrichtung von einem bewegenden Objekt nach Anspruch 1 oder 2, dadurch gekennzeichnet, daß die Wärmedetektoren in einem bestimmten Abstand voneinander in der Fokalebene eines konvergierenden optischen Systems derart angeordnet sind, daß die Markierungslinien erzeugt werden, wobei die optischen Achsen durch die von den Detektoren erzeugten und von dem konvergierenden optischen System erhaltenen Strecken definiert werden.

4. Vorrichtung zum Messen des Abstandes dieser Vorrichtung von einem bewegenden Objekt nach Anspruch 1, 2 oder 3, dadurch gekennzeichnet, daß die Verarbeitungsmittel dazu bestimmt sind, die nachfolgenden Größen zu bewerten:

$$R = \lambda/2 \ \frac{(ta - tb)}{\theta} \cdot \frac{fb - fa}{\sin \theta}$$

worin λ die Strahlungswellenlänge ist der von den Sendemitteln ausgestrahlten Welle,

(ta − tb) das Zeitintervall zwischen den Zeitpunkten der Überschreitung der beiden Markierungslinien durch das bewegende Objekt ist,

fa, fb die von dem bewegenden Objekt zu den Zeitpunkten der Überschreitung der Markierungslinien erzeugten Dopplerfrequenzen sind und

θ der durch die Markierungslinien eingeschlossene Winkel ist.

5. Vorrichtung zum Messen des Abstandes dieser Vorrichtung von einem bewegenden Objekt nach einem der Ansprüche 1 bis 4, zum Liefern eines mit einem bewegenden Objekt zusammenhängenden Signal und dadurch gekennzeichnet, daß die Verarbeitungsmittel einen Dopplerfrequenz-Spektrumanalysator aufweisen zum Liefern von Dopplerfrequenzanteilen, und daß die Verarbeitungsmittel dazu vorgesehen sind, das genannte Signal wirksam zu machen, wenn einige der nachfolgenden Bedingungen erfüllt sind:

c1) der Abstand R der Vorrichtung von dem bewegenden Objekt unterschreitet einen vorbestimmten Wert $R_{MAX}$,

c2) der Taktsignalpegel ist ausreichend.

## Claims

1. Arrangement for measuring the distance separating the arrangement from a moving body, the ar-

EP 0 224 286 B1

rangement comprising transmission means for transmitting a wave in a measuring field, receiving means for receiving the wave reflected from the moving body moving in the measuring field and also for supplying a beat signal at the Doppler frequency, delimiting means for providing in the measuring field, at least two datum lines and processing means receiving the values of the Doppler frequency signals at the instants at which the moving body crosses the datum lines, characterized in that the delimiting means are constituted by thermal detectors installed in an optical arrangement having at least two non-parallel optical axes to define the datum lines, that a timing circuit is provided to define the instants at which the moving body crosses the datum lines and to supply them to the processing means, and that the processing means are arranged for processing the distance information in response to the two above values of the Doppler frequency signal and the time interval between the said instants of the crossings.

2. Arrangement for measuring the distance separating the arrangement from a moving body as claimed in claim 1, characterised in that a starter means is provided which is controlled by thermal detectors for triggering the transmission means only when the moving body crosses a datum line.

3. An arrangement for measuring the distance separating the arrangement from a moving body as claimed in claim 1 or 2, characterised in that the thermal detectors are arranged at a given distance from each other in the focal plane of a converging optical means so as to provide the datum lines, the optical axes being defined by the paths produced by the detectors and obtained by the converging optical means.

4. Arrangement for measuring the distance separating the arrangement from a moving body as claimed in claim 1, 2 or 3, characterized in that the processing means are designed for evaluating the following quantities:

$$R = \lambda/2 \frac{(t_a - t_b)}{\theta} \cdot \frac{f_b - f_a}{\sin \theta}$$

where $\lambda$ is the radiation eavelength of the wave transmitted by the transmission means,
$(t_a - t_b)$ is the time interval separating the instants at which the moving body crosses the two datum lines,
$f_a$, $f_b$ are Doppler frequencies generated by the moving body on crossing the datum lines and
$\theta$ is the angle formed by the datum lines.

5. Arrangement for measuring the distance separating the arrangement from a moving body as claimed in any one of the claims 1 to 4, intended to produce a signal relating to a moving body and characterized in that the processing means comprise a Doppler frequency spectrum analyser for producing frequency components, and that an active signal is only produced when some of the following conditions are satisfied:

c1) the distance R separating the arrangement from the moving body is less than a predetermined value $R_{MAX}$,

c2) the beat signal has an adequate level.

7

FIG.1

FIG.2

EP 0 224 286 B1

FIG.3

FIG.4a

FIG.4b

FIG.5

BUS D

FB

10

92

∗

TOUT

12

FIG.6

K51

S2 = 1

K512

N

R ≤ R MAX

K518

N

K53'

"1" ⟶ TOUT

K56

0 ⟶ NIRQ

Ca

15b

15a

107

110

Cb

100          8          120

**FIG.7**

155

151

150

15a,15b

**FIG.8**

**FIG. 9**

**FIG. 10**